(19) Europäisches Patentamt
European Patent Office
Office européen des brevets

(11) **EP 4 585 568 A1**

(12) **EUROPEAN PATENT APPLICATION**
published in accordance with Art. 153(4) EPC

(43) Date of publication:
**16.07.2025 Bulletin 2025/29**

(21) Application number: **23861801.1**

(22) Date of filing: **17.02.2023**

(51) International Patent Classification (IPC):
**C02F 1/28** (2023.01)  **B01J 20/00** (2006.01)
**C02F 101/30** (2006.01)

(52) Cooperative Patent Classification (CPC):
**B01J 20/00; C02F 1/28;** C02F 2101/30; Y02C 20/40

(86) International application number:
**PCT/CN2023/076675**

(87) International publication number:
**WO 2024/051091 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.09.2022 CN 202211102344**

(71) Applicant: **Huaneng Clean Energy Research
Institute
Beijing 102209 (CN)**

(72) Inventors:
• LIU, Rong
  **Beijing 102209 (CN)**
• GUO, Dongfang
  **Beijing 102209 (CN)**
• WANG, Huanjun
  **Beijing 102209 (CN)**
• NIU, Hongwei
  **Beijing 102209 (CN)**
• LIU, Lianbo
  **Beijing 102209 (CN)**

(74) Representative: **Metida
Gyneju str. 16
01109 Vilnius (LT)**

(54) **ABSORPTION SOLVENT WASTE LIQUID RECYCLING METHOD AND CO2 CAPTURING METHOD**

(57)     A recovery method of absorption solvent waste liquid and a $CO_2$ capture method are provided. The recovery method includes providing mixed slurry of adsorbent and absorption solvent waste liquid; and performing reaction on the mixed slurry at 60-150°C under ultrasonic and sealing conditions; wherein the adsorbent is solid waste containing alkaline substances. According to the disclosure, solid waste containing alkaline substances is used as an adsorbent to treat the absorption solvent waste liquid, so that toxic and carcinogenic diethylene glycol and other harmful substances formed by self-polymerization in the absorption solvent waste liquid can be adsorbed on the solid waste, and the removal rate can reach more than 88%. After this treatment, the obtained absorption solvent waste liquid can be recycled. In addition, the use of solid waste as adsorbent has low production cost, and the waste can also be used as solid waste.

**EP 4 585 568 A1**

**Description**

**TECHNICAL FIELD**

The disclosure relates to the technical field of $CO_2$ capture, in particular to a recovery method of absorption solvent waste liquid and a $CO_2$ capture method.

**BACKGROUND**

Chemical absorption method $CO_2$ capture is based on the acidic characteristics of $CO_2$, which is absorbed by acid-base chemical reaction with alkaline solvent, and then the solvent is regenerated by reverse reaction. At present, the main absorption solvent is alkanolamine, which uses alkanolamine aqueous solution with hydroxyl and amine groups as absorption solvent, and uses absorption tower and regeneration tower to form a system to capture $CO_2$.

The pollutants discharged by the chemical absorption method $CO_2$ capture device are mainly the absorption solvent waste liquid which absorbs $SO_2$, $CO_2$ and other impurities in flue gas/tail gas from the absorption tower, and the main component of the absorption solvent waste liquid is organic amine. The treatment of the invalid organic amine absorption solvent waste liquid has become a difficult problem that puzzles the development of technology. Direct discharge will lead to the increase of COD index and water pollution, and the long-term use of organic amine absorption solvent waste liquid will self-polymerize to form toxic and carcinogenic diethylene glycol and other harmful substances.

How to treat the absorption solvent waste liquid harmlessly, so as to minimize the discharge, reduce the COD index of the discharged liquid and reduce the pressure of environmental protection, has become an important problem we are facing at present.

**SUMMARY**

Therefore, the technical problem to be solved by the disclosure is to overcome the defect that the absorption solvent waste liquid cannot be effectively recycled in the prior art, thereby providing a recovery method of the absorption solvent waste liquid.

In order to solve the above problems, the disclosure adopts the following technical scheme.

A recovery method of absorption solvent waste liquid is provided and includes: providing mixed slurry of adsorbent and absorption solvent waste liquid; and performing reaction on the mixed slurry at 60-150°C under ultrasonic and sealing conditions;

wherein the adsorbent is solid waste containing alkaline substances.

It should be noted that, in the disclosure, the absorption solvent waste liquid refers to the chemical absorption method using alkanolamine as the absorption solvent to capture $CO_2$, and the discharged pollutants are mainly absorption solvent waste liquid which absorbs $SO_2$, $CO_2$ and other impurities in flue gas/tail gas from the absorption tower, and the main component of absorption solvent waste liquid is organic amine.

In the disclosure, the reaction is performed at 60-150°C, such as 60°C, 70°C, 80°C, 90°C, 100°C, 110°C, 120°C, 130°C, 140°C or 150°C. If the temperature is lower than 60°C, the reaction rate of the adsorbent to absorb harmful substances in the absorption solvent waste liquid is too slow. If the temperature is higher than 150°C, it is not conducive to the adsorption of harmful substances in absorption solvent waste liquid by adsorbent. From the viewpoint of improving the adsorption reaction rate, the reaction temperature is preferably 70 ~ 90°C, most preferably 80°C.

In the disclosure, the reaction time is 2-5h.

In a preferred embodiment of the disclosure, the adsorbent is selected from at least one or a combination of carbide slag, fly ash, steel slag, slag or waste cement, and the combination can be a physical mixture of at least one of the above solid wastes.

In a preferred embodiment of the disclosure, the solid waste is modified, and a modification method comprises:

S1: dispersing the solid waste in water for soaking and then drying, to obtain dried solid waste;
S2: calcining the dried solid waste obtained in S1 at 500-800 °C for 1-5 h, to obtain calcined product;
S3: dispersing the calcined product in S2 in a strong alkali solution for soaking, and then drying, to obtain product; and
S4: calcining the product obtained in S3 at 500-800 °C for 1-3h.

The performance of solid waste can be greatly improved by this treatment method. On the one hand, the promotion of water is reflected in the fact that the existence of water promotes the generation of hydroxide in solid waste, thus promoting the enhancement of mineralization performance. On the other hand, the pore-forming effect of water changes the pore structure of solid waste and significantly improves the physical properties of absorbent.

Typical but non-limiting modification methods of solid waste include:

S1: dispersing solid waste in deionized water with a liquid-solid ratio of 1: 1-10: 1, placing it on a magnetic stirrer, stirring at 25 °C for 2h, standing for 12h, removing supernatant, drying the sample in an oven at 60-100 °C for 24h, and grinding the dried product;

S2: placing the ground product in a muffle furnace and calcining at 500-800 °C for 1h in the air atmosphere;

S3: dispersing the calcined product in 5-25wt.% sodium hydroxide solution with a liquid-solid ratio of 1: 1-10: 1, placing it on a magnetic stirrer, and stirring at 25 °C for 4h; after standing for 12h, removing supernatant, rinsing with deionized water, drying the rinsed product in an oven at 60-100 °C for 24h, and grinding the dried product; and

S4: placing the product after S3 in a muffle furnace, and calcining for 1h at 500-800 °C in air atmosphere to obtain modified solid waste.

In a preferred embodiment of the disclosure, the pH value of the mixed slurry is 8-10, such as 8.2, 8.4, 8.6, 8.8, 9, 9.2, 9.4, 9.6, 9.8 or 10. The limited pH value of the mixed slurry can improve the adsorption reaction rate and ensure the stability of the solvent at the same time, and the pH value is preferably 8. Specifically, the pH value of the mixed slurry can be adjusted by adjusting the dosage ratio of the adsorbent to the absorption solvent waste liquid.

In a preferred embodiment of the disclosure, the solid-liquid ratio of the mixed slurry is 80-500g/L, and the solid-liquid ratio refers to the ratio of the mass g of the adsorbent to the volume L of the absorption solvent waste liquid. The solid-liquid ratio is, for example, 100g/L, 150g/L, 200g/L, 250g/L, 300g/L, 350g/L, 400g/L, 450g/L or 500g/L. With this restriction, the reaction of the adsorbent to absorb harmful substances in the absorption solvent waste liquid can be ensured to proceed completely, and the solid-liquid ratio is preferably 150-250 g/L. The most preferred solid-liquid ratio is 200 g/L.

As the reaction vessel of the disclosure, the reaction can be performed in a stirring kettle.

In a preferred embodiment of the disclosure, the mixed slurry is reacted at 60 ~ 150°C by microwave heating.

In a preferred embodiment of the disclosure, the frequency of the ultrasound is 20KHz to 120 KHz, such as 20 KHz, 30KHz, 40KHz, 50KHz, 60KHz, 70KHz, 80KHz, 90KHz or 100KHz. With this limitation, the ultrasonic effect can be ensured, the adsorption reaction rate is faster, and the adsorbent completely adsorbs harmful substances. Preferably, the ultrasonic frequency is 20-40 KHz.

In a preferred embodiment of the disclosure, the reaction is performed at a pressure of 1 to 5MPa, such as 1MPa, 1.5MPa, 2MPa, 2.5MPa, 3MPa, 3.5MPa, 4MPa, 4.5MPa or 5MPa. In this way, the smooth progress of the adsorption reaction can be ensured, and the pressure is preferably 2-4MPa.

In a preferred embodiment of the disclosure, a recovery method of the absorption solvent waste liquid includes: mixing the adsorbent with absorption solvent waste liquid to be treated to obtain the mixed slurry, controlling pH value of the mixed slurry to be 8-10, wherein a solid-liquid ratio of the mixed slurry is 100-500 g/L, the mixed slurry is placed in a stirring kettle, heated to 60-150 °C by microwave heating, and reacted under sealed conditions with ultrasonic frequency of 20-100 KHz and pressure of 1-5MPa.

The disclosure also provides a $CO_2$ capture method comprising the recovery method of the absorption solvent waste liquid.

The beneficial effects are as follows.

According to the recovery method of the absorption solvent waste liquid provided by the disclosure, the solid waste containing alkaline substances is used as an adsorbent to treat the absorption solvent waste liquid, so that toxic and carcinogenic diethylene glycol and other harmful substances formed by self-polymerization in the absorption solvent waste liquid can be adsorbed on the solid waste, and the removal rate can reach more than 88%. After this treatment, the absorption solvent waste liquid can be recycled. In addition, the use of solid waste as adsorbent has low production cost, and the waste can also be used as solid waste.

The recovery method of absorption solvent waste liquid provided by the disclosure greatly improves the performance of solid waste by modifying the performance of the solid waste. On the one hand, the promotion of water is reflected in the fact that the existence of water promotes the generation of hydroxide in solid waste, thus promoting the enhancement of mineralization performance. On the other hand, the pore-forming effect of water changes the pore structure of solid waste and significantly improves the physical properties of absorbent.

## DETAILED DESCRIPTION OF THE EMBODIMENTS

Embodiment 1

A recovery method of absorption solvent waste liquid is provided, which comprises the following steps: the adsorbent fly ash is mixed with the absorption solvent waste liquid to be treated to obtain mixed slurry, the pH value of the mixed slurry is 8, and the solid-liquid ratio of the mixed slurry is 200 g/L. The mixed slurry is placed in a stirring kettle, heated to 80°C by microwave, and reacted for 3h under sealed conditions with ultrasonic frequency of 20KHz and pressure of 3MPa.

Where the fly ash is modified as follows:

first, direct hydration: 100g of fly ash is added into a 500ml round-bottomed flask, and deionized water is added, with a liquid-solid ratio of 5: 1; the flask is place on a magnetic stirrer and stirred at 25°C for 2h; after standing for 12h, the supernatant is removed, and the sample is dried in an oven at 80°C for 24h; after drying, the sample is ground and recorded as H;

second, calcination: the directly hydrated sample H is placed in a muffle furnace to calcine at 700 °C for 1h in the air atmosphere to obtain a calcined product;

third, alkali washing: a proper amount of calcined products obtained in the above steps is put into a 500ml round-bottomed flask, and 25wt.% sodium hydroxide solution is added, with a liquid-solid ratio of 6: 1; the flask is placed on a magnetic stirrer and stirred at 25°C for 4h; after standing for 12h, the supernatant is removed and rinsed with deionized water; the sample is dried in an oven at 80°C for 24h, and the dried sample is marked as A after grinding;

fourth, calcination after alkali washing: the alkali washed sample A is placed in a muffle furnace and calcined at 600°C for 1h in the air atmosphere to obtain the modified fly ash.

Embodiment 2

A recovery method of absorption solvent waste liquid is provided, which comprises the following steps:
the adsorbent carbide slag is mixed with the absorption solvent waste liquid to be treated to obtain mixed slurry, the pH value of the mixed slurry is 9, and the solid-liquid ratio of the mixed slurry is 100 g/L. The mixed slurry is placed in a stirring kettle, heated to 150°C by microwave, and reacted for 5h under sealed conditions with ultrasonic frequency of 80KHz and pressure of 5MPa.

Where, the carbide slag is modified as follows:

first, direct hydration: a proper amount of carbide slag is added into a 500ml round-bottomed flask, and deionized water is added, with a liquid-solid ratio of 4: 1; the flask is place on a magnetic stirrer and stirred at 25°C for 2h; after standing for 12h, the supernatant is removed, and the sample is dried in an oven at 70°C for 24h; after drying, the sample is ground and recorded as H;

second, calcination: the directly hydrated sample H is placed in a muffle furnace to calcine at 600 °C for 1h in the air atmosphere to obtain a calcined product;

third, alkali washing: a proper amount of calcined products obtained in the above steps is put into a 500ml round-bottomed flask, and 15wt.% sodium hydroxide solution is added, with a liquid-solid ratio of 6: 1; the flask is placed on a magnetic stirrer and stirred at 25°C for 4h; after standing for 12h, the supernatant is removed and rinsed with deionized water; the sample is dried in an oven at 90°C for 24h, and the dried sample is marked as A after grinding;

fourth, calcination after alkali washing: the alkali washed sample A is placed in a muffle furnace and calcined at 700°C for 1h in the air atmosphere to obtain the modified carbide slag.

Embodiment 3

A recovery method of absorption solvent waste liquid is provided, which comprises the following steps:
the adsorbent steel slag is mixed with the absorption solvent waste liquid to be treated to obtain mixed slurry, the pH value of the mixed slurry is 10, and the solid-liquid ratio of the mixed slurry is 500 g/L. The mixed slurry is placed in a stirring kettle, heated to 60°C by microwave, and reacted for 2h under sealed conditions with ultrasonic frequency of 100KHz and pressure of 1MPa.

Where the steel slag is modified as follows:

first, direct hydration: a proper amount of steel slag is added into a 500ml round-bottomed flask, and deionized water is added, with a liquid-solid ratio of 8: 1; the flask is place on a magnetic stirrer and stirred at 25°C for 2h; after standing for 12h, the supernatant is removed, and the sample is dried in an oven at 100°C for 24h; after drying, the sample is ground and recorded as H;

second, calcination: the directly hydrated sample H is placed in a muffle furnace to calcine at 650 °C for 1h in the air atmosphere to obtain a calcined product;

third, alkali washing: a proper amount of calcined products obtained in the above steps is put into a 500ml round-bottomed flask, and 8wt.% sodium hydroxide solution is added, with a liquid-solid ratio of 7: 1; the flask is placed on a magnetic stirrer and stirred at 25°C for 4h; after standing for 12h, the supernatant is removed and rinsed with deionized water; the sample is dried in an oven at 90°C for 24h, and the dried sample is marked as A after grinding;

fourth, calcination after alkali washing: the alkali washed sample A is placed in a muffle furnace and calcined at 750°C for 1h in the air atmosphere to obtain the modified teel slag.

Embodiment 4

Compared with Embodiment 1, this Embodiment differs in that the pH value is adjusted to 7.

Embodiment 5

Compared with Embodiment 1, this Embodiment differs in that the ultrasonic frequency is changed to 120KHz.

Embodiment 6

Compared with Embodiment 1, this Embodiment differs in that the solid-liquid ratio is changed to 80g/L.

Embodiment 7

Compared with Embodiment 1, this Embodiment differs in that the adsorbent fly ash is not modified.

Comparative Embodiment 1

Compared with Embodiment 1, this comparative Embodiment differs in that the reaction temperature is 40°C.

Comparative Embodiment 2

Compared with Embodiment 1, this comparative Embodiment differs in that the reaction temperature is 170°C.
The pollutant concentration in the before and after absorption solvent waste liquid is treated by using the liquid chromatographic analysis (where the pollutant refers to toxic and carcinogenic diethylene glycol and other harmful substances formed by self-polymerization in the absorption solvent waste liquid). The total concentration of harmful substances in the absorption solvent waste liquid before treatment is $3.18 \times 10^4$ mg/L, and the removal rate of pollutants is calculated. The higher the removal rate, the better the effect.

$$\text{removal rate} = \frac{\text{concentration before removal} - \text{concentration after removal}}{\text{concentration before removal}} \times 100\%$$

The removal rates of Embodiments 1-7 and Comparative Embodiments 1-2 are shown in Table 1:

Table 1

| Embo dimen t 1 | Embo dimen t 2 | Embo dimen t 3 | Embo dimen t 4 | Embo dimen t 5 | Embo dimen t 6 | Embo dimen t 7 | Embo dimen t 8 | Comp arativ e Embo dimen t 1 | Comp arativ e Embo dimen t 2 |
|---|---|---|---|---|---|---|---|---|---|
| remov al rate % | 96% | 93% | 92% | 91% | 88% | 89% | 83% | 76% | 75% |

According to the experimental results, the pollutant removal rate of Embodiments 1-7 of the disclosure is above 83%, which is significantly higher than that of the Comparative Embodiment. By comparing the data between Embodiments 4-6 and Embodiment 1, it can be seen that the pollutant removal rate in the absorption solvent waste liquid can be further improved by adjusting pH value, solid-liquid ratio and microwave radiation frequency.
Obviously, the above-mentioned embodiment is only an example for clear explanation, and is not a limitation of the implementation. For those skilled in the art, other changes or changes in different forms can be made on the basis of the above description. It is not necessary and impossible to exhaust all the embodiments here. However, the obvious changes or changes derived therefrom are still within the scope of protection created by the disclosure.

**Claims**

**1.** A recovery method of absorption solvent waste liquid, comprising:

providing mixed slurry of adsorbent and absorption solvent waste liquid; and
performing reaction on the mixed slurry at 60-150°C under ultrasonic and sealing conditions;
wherein the adsorbent is solid waste containing alkaline substances.

2. The method according to claim 1, wherein a reaction temperature is 70-90 °C and a reaction time is 2-5 h; and/or the adsorbent is selected from at least one of fly ash, carbide slag, steel slag, slag or waste cement, preferably a combination of at least one of fly ash, steel slag or waste cement and carbide slag.

3. The method according to claim 1 or 2, wherein the solid waste is modified, and a modification method comprises:

    S1: dispersing the solid waste in water for soaking and then drying, to obtain dried solid waste;
    S2: calcining the dried solid waste obtained in S1 at 500-800 °C for 1-5 h, to obtain calcined product;
    S3: dispersing the calcined product in S2 in a strong alkali solution for soaking, and then drying, to obtain product; and
    S4: calcining the product obtained in S3 at 500-800 °C for 1-3h.

4. The method according to claim 1 or 2, wherein pH value of the mixed slurry is 7-10, preferably 8-9.

5. The method according to claim 1 or 2, wherein a solid-liquid ratio of the mixed slurry is 80-500g/L, preferably 150-200 g/L.

6. The method according to claim 1 or 2, wherein the mixed slurry is reacted at 60-150 °C by microwave heating.

7. The method according to claim 1 or 2, wherein ultrasound frequency is 20 KHz to 120 KHz, preferably 20 KHz to 40 KHz.

8. The method according to claim 1 or 2, wherein the reaction is performed at a pressure of 1-5 MPa, preferably 2-4 MPa.

9. The method according to claim 1 or 2, wherein comprises:
mixing the adsorbent with absorption solvent waste liquid to be treated to obtain the mixed slurry, controlling pH value of the mixed slurry to be 8-10, wherein a solid-liquid ratio of the mixed slurry is 100-500 g/L, the mixed slurry is placed in a stirring kettle, heated to 60-150 °C by microwave heating, and reacted under sealed conditions with ultrasonic frequency of 20-100 KHz and pressure of 1-5MPa.

10. A $CO_2$ capture method, comprising the recovery method of the absorption solvent waste liquid according to any one of claims 1 to 9.

## INTERNATIONAL SEARCH REPORT

| International application No. |
|---|
| **PCT/CN2023/076675** |

### A. CLASSIFICATION OF SUBJECT MATTER

C02F1/28(2023.01)i; B01J20/00(2006.01)i; C02F101/30(2006.01)n

According to International Patent Classification (IPC) or to both national classification and IPC

### B. FIELDS SEARCHED

Minimum documentation searched (classification system followed by classification symbols)

IPC:C02F, B01J

Documentation searched other than minimum documentation to the extent that such documents are included in the fields searched

Electronic data base consulted during the international search (name of data base and, where practicable, search terms used)

CNKI, CNABS, CNTXT, VEN, ENTXT, ELSEVIER: 粉煤灰, 电石渣, 钢渣, 矿渣, 废旧水泥, 吸附, 醇胺, 改性, 二氧化碳, CO2, 捕集, 二甘醇, 超声, 微波, 水, 浸泡, 碱, 煅烧; fla, ash, carbide, slag, acetylene, residue, steel, scoria, worn, out, waste, cement, concret+, absorb, absorp+, alkylol, alcohol, amine, modif+, carbon, dioxide, catch, collect+, diglycol, ultrasound, ultrasonic, micro, wave, water, dip, dunk, alkali, calcin+, incinerat+

### C. DOCUMENTS CONSIDERED TO BE RELEVANT

| Category* | Citation of document, with indication, where appropriate, of the relevant passages | Relevant to claim No. |
|---|---|---|
| PX | CN 115636459 A (HUANENG POWER INTERNATIONAL INC. et al.) 24 January 2023 (2023-01-24)<br>claims 1-10 | 1-10 |
| X | CN 108704445 A (SICHUAN UNIVERSITY) 26 October 2018 (2018-10-26)<br>claims, and description, paragraphs 2-8 | 1, 2, 4-10 |
| Y | CN 108704445 A (SICHUAN UNIVERSITY) 26 October 2018 (2018-10-26)<br>claims, and description, paragraphs 2-8 | 3 |
| Y | CN 108975739 A (ANHUI SHENZHOU BUILDING MATERIAL TECHNOLOGY CO., LTD.) 11 December 2018 (2018-12-11)<br>description, paragraphs 2-10 | (3) |
| A | KR 20120074092 A (RESEARCH INSTITUTE OF INDUSTRIAL SCIENCE AND TECHNOLOGY) 05 July 2012 (2012-07-05)<br>entire document | 1-10 |

[✓] Further documents are listed in the continuation of Box C.    [✓] See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 June 2023** | **14 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/076675**

**C.    DOCUMENTS CONSIDERED TO BE RELEVANT**

| Category* | Citation of document, with indication, where appropriate, of the relevant passages | Relevant to claim No. |
|---|---|---|
| A | CN 113713778 A (YANCHENG TEACHERS UNIVERSITY) 30 November 2021 (2021-11-30)<br>    entire document | 1-10 |
| A | CN 113786703 A (UNIVERSITY OF SCIENCE AND TECHNOLOGY LIAONING) 14 December 2021 (2021-12-14)<br>    entire document | 1-10 |

Form PCT/ISA/210 (second sheet) (July 2022)

**INTERNATIONAL SEARCH REPORT**
Information on patent family members

International application No.

**PCT/CN2023/076675**

| Patent document cited in search report | | | Publication date (day/month/year) | Patent family member(s) | Publication date (day/month/year) |
|---|---|---|---|---|---|
| CN | 115636459 | A | 24 January 2023 | None | |
| CN | 108704445 | A | 26 October 2018 | None | |
| CN | 108975739 | A | 11 December 2018 | None | |
| KR | 20120074092 | A | 05 July 2012 | None | |
| CN | 113713778 | A | 30 November 2021 | None | |
| CN | 113786703 | A | 14 December 2021 | None | |

Form PCT/ISA/210 (patent family annex) (July 2022)